# EUROPEAN PATENT SPECIFICATION

(11) **EP 2 907 756 B1**
(45) Date of publication and mention of the grant of the patent: **27.04.2016**
(21) Application number: 14187071.7
(22) Date of filing: 30.09.2014
(51) Int. Cl.: B64D 13/00, G01N 1/22, G01F 1/66

(54) **Apparatus for sensing one or more properties of a fluid**
Vorrichtung zur Erfassung einer oder mehrerer Eigenschaften einer Flüssigkeit
Appareil pour détecter une ou plusieurs propriétés d'un fluide

(30) Priority: 18.02.2014 EP 14155576
(43) Date of publication of application: 19.08.2015
(73) Proprietor: Airbus Operations GmbH, 21129 Hamburg (DE)
(72) Inventor: Schoell, Robert, 21129 Hamburg (DE)
(74) Representative: Schicker, Silvia

(56) References cited:
- EP-A2- 2 278 567
- US-A- 3 368 406
- US-A- 4 186 602

## Description

The present invention relates to an apparatus for sensing one or more properties of a fluid. The apparatus can be used in a means of transport, such as an aircraft, a bus or a train as well as in a particular system, in which a fluid needs to be monitored. The invention also relates to a vehicle comprising such an apparatus.

In conventional apparatuses and systems for sensing and monitoring properties of a fluid, sensor(s) need(s) to be arranged in such a way, that the fluid passes the sensor(s). If there is no movement of the fluid, the sensing results may only reflect local properties of the fluid, which do not represent the properties of the fluid within a certain space or volume. Thus, the fluid has to be extracted from the space at various positions.

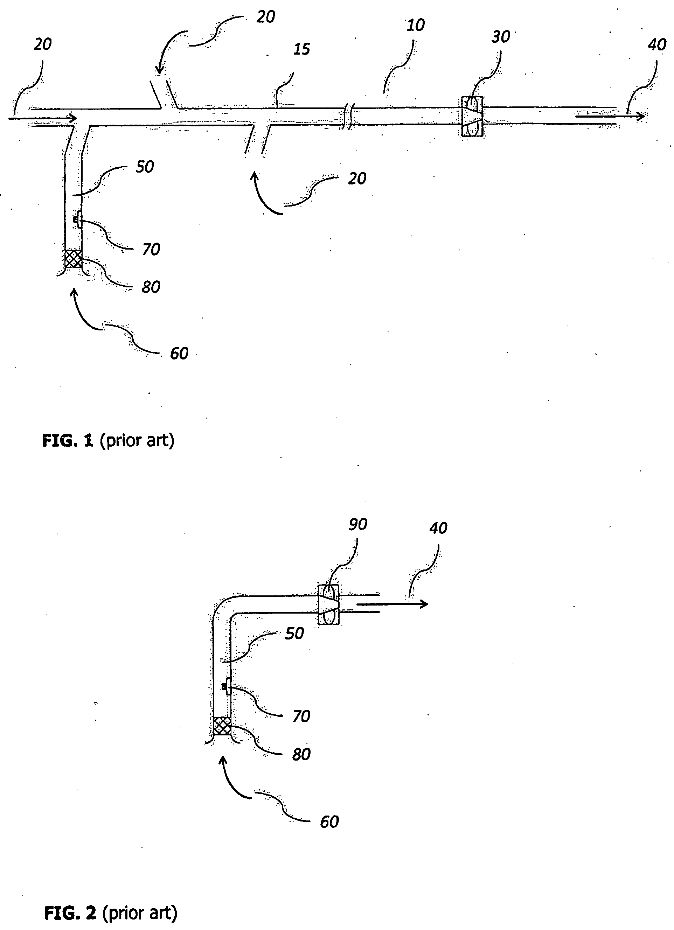

A conventional fluid extraction system 10 is depicted in Figure 1. The illustrated system 10 comprises a main air line 15 and may, for example, be employed in a vehicle, such as an aircraft, so as to extract air from different locations of a passenger cabin 20 as well as from other locations within the vehicle, such as, for example, an avionics bay 60. In order to create the necessary pressure difference within the main air line 15, a fan 30 is installed in the main air line 15. Instead of a fan, a pressure difference between the cabin 20 or the avionics bay 60 and a space outside of the cabin 20 or the avionics bay 60 could also be used in order to convey the air to be extracted through the main air line 15. Extracted air 40 exiting the main air line 15 can be discharged from the vehicle, re-used in an air conditioning unit for recirculated to the passenger cabin 20. Attached to the main air line 15 is a branch line or branch duct 50 through which air to be monitored is conveyed. In the illustrated system 10, the air to be monitored is extracted from the avionics bay 60 of the vehicle. The air flowing through the branch line 50 passes a sensor 70 arranged within the branch duct 50. In dependence on the source of the air flowing through the branch line 50, the sensor 70 may, for example, be designed in the form of a temperature sensor, in the form of a flow sensor, in the form of a pressure sensor, etc.. Typically, the sensor 70 includes a sensor element suitable to sense the desired property of the air flowing through the branch line 50 and being arranged in the center of the branch duct 50 in order to achieve the best sensing results. Due to the exposed location of the sensing element, it may easily be affected by dust or other particles transported with the extracted air. Therefore, an air filter 80 is required at the intake of the branch duct 50.

Another air monitoring system according to the prior art is illustrated in Figure 2. In this embodiment, the sensing system is not coupled to an existing air extraction system as illustrated with respect to Figure 1. Thus, the system according to Figure 2 requires its own ventilation system, such as a fan 90. This fan 90, however, can be much smaller than fan 30 employed in the system illustrated in Figure 1. The air to be monitored is discharged from a desired location, such as for example, an avionics bay 60 and directed through the duct 50 where it passes first the air filter 80 and thereafter the sensor 70. Extracted air 40 exiting the duct 50 typically is not discharged from the vehicle, but returned back to the same space where it came from, i.e. for example the avionics bay 60. The air monitoring system according to Figure 2 can be installed independent of an air extraction system or any other air conveying system. However, due to the same arrangement of the sensing element of the sensor 70, the air filter 80 is required to protect the sensing element from dust, particles etc..

US 4,186,602, which constitutes the closest prior art, discloses a device for sensing a mass rate of flow of a compressible fluid such as air. The device comprises a turbine rotor mounted within a circular in section passage formed in a sensor housing by a section of tubing, which may be mounted within the flow passage within which the mass flow rate is to be sensed. A pressure sensor and a temperature sensor are arranged within the sensor housing for sensing the downstream pressure from the turbine rotor respectively and the temperature of the fluid flowing through the sensor.

US 3,368,406 describes a temperature sensor air augmenter system for providing an adequate airflow over cabin temperature sensors for cabin temperature indication and control. A jet pump draws cabin air through a small opening in the cabin and past temperature sensors in an airpath conductor mounted over the opening. The jet stream for this pump comes from air-conditioning systems of the aircraft.

It is an object of the invention to provide an apparatus for sensing one or more properties of a fluid that requires low maintenance and is also easier and cheaper to produce. Further, it is an object of the invention to provide a vehicle which is equipped with an apparatus of the kind.

In order to solve the above object, an apparatus according to claim 1 is provided. Further, a vehicle according to claim 14 is provided. Preferred embodiments and further aspects of the present invention are defined in the dependent claims.

An apparatus for sensing one or more properties of a fluid comprises a conveying device configured for conveying the fluid. Specifically, the conveying device may be designed in the form of a fan, impeller, rotor or other rotating device. Further, the apparatus comprises at least one sensor arranged on a rotating part of the conveying device and being adapted to sense the one or more properties of the conveyed fluid. For example, the sensor may be arranged a conveying member or a hub of the conveying device. The apparatus is particularly suitable for use in an aircraft or other means of transportation, such as busses or trains.

The conveying device may comprise at least one fluid conveying member. Preferably, the sensor is arranged on the fluid conveying member. In case the conveying device comprises more than one fluid conveying member, one sensor can be arranged on each fluid conveying member. However, according to a different implementation, a different number of sensors can be arranged on each fluid conveying member. For instance, while certain fluid conveying members may be provided with one or more sensors, there may also be provided fluid conveying members without any sensor.

The at least one fluid conveying member of the conveying device may be designed in the form of a rotor blade. The fluid passes or flows over a surface of the conveying device during operation thereof or at least over the at least one fluid conveying member of the conveying device.

The at least one sensor may be mounted on a surface of the fluid conveying member of the conveying device. In particular in case the fluid conveying member is a rotating member of the conveying device, the sensor needs to be securely fixed to the fluid conveying member, in order to withstand frictional forces of the fluid being conveyed and also centrifugal forces acting on the sensor. Furthermore, when arranging the sensor on a surface of the fluid conveying member (rotor blade), the balance of the conveying device (fan) has to be considered to avoid any unbalanced mass.

Preferably, the sensor is mounted on a surface of the conveying device and in particular on a surface of the fluid conveying member of the conveying device in such a manner, that a surface of the sensor is arranged flush with a surface of the conveying device and the fluid conveying member, respectively. In other words, the sensor may be integrated into the conveying device and in particular into the fluid conveying member of the conveying device. This integration can include forming a recess in the conveying device or the fluid conveying member into which the sensor can be placed and mounted. By arranging the surface of the sensor flush with a surface of the conveying device and the fluid conveying member, respectively, the flow resistance along the conveying device and/or the fluid conveying member may be reduced. Combinations of surface mounted and integrated sensors can also be implemented. In case of a fan having rotor blades with a curved surface, it would be advantageous if the sensor could be made with a corresponding curved surface.

Also to avoid any unbalanced mass of the conveying device (such as a fan), an equal number of sensors may be arranged on each of the one or more fluid conveying members (such as rotor blades). On the other hand, and equal number of sensors may also be arranged on a pair of opposite fluid conveying members, while a different number of sensors may be arranged on another pair of opposite fluid conveying members. In any case, an unbalanced mass can be remedied with counter weights provided on or in the conveying device and/or the conveying members.

Furthermore, in an implementation, the sensor of the apparatus may comprise a first sensor element and a second sensor element, wherein at least one of the first and the second sensor element is arranged on the conveying means. The second sensor element may be designed in the form of an emitter configured for emitting a signal into/through the conveyed fluid. The first sensor element may be configured for sensing the signal emitted by the second sensor element. Preferably, the first and the second sensor element are arranged in such a manner that they face each other at least during particular time periods during operation of the apparatus. For instance, the second sensor element may be arranged at a distance from the conveying device and emit its signal through the conveyed fluid to the conveying device and hence the first sensor element. The second sensor element may, for example, be arranged at an inner surface of a duct through which the fluid is conveyed. In this way, a first sensor element arranged on the conveying device can sense the emitted signal. If the conveying device rotates, the first sensor element passes the signal path each time the conveying device has fully turned.

Preferably, the second sensor element is arranged on a first fluid conveying member of the conveying device and the first sensor element is arranged on a second fluid conveying member of the conveying device in such a manner that the first and the second sensor element face each other.

The first and the second fluid conveying members may be arranged adjacent to each other. Depending on the design of the fluid conveying members, a pairwise arrangement of the first and the second sensor element may, however, also be accomplished by arranging the sensor elements on fluid conveying members which are not disposed immediately adjacent to each other. For instance, if the fluid conveying members have different sizes, so that the emitted signal can pass the adjacent (smaller) fluid conveying member, the signal emitted by the second sensor element can also be sensed by a first sensor element arranged on the next (bigger) fluid conveying member.

In any case, the emitter-sensor arrangement allows for sensing a property of the fluid along a line and thus is particularly suitable for sensing particles or other fluids etc. being present in the fluid to be monitored. For instance, if the fluid is air, dust, smoke, spray of a fluid etc. can be sensed by the emitter-sensor arrangement. Alternatively or additiorially, the sensor may comprise a first sensor element and a second sensor element, the second sensor element being designed in the form of a reflector configured for reflecting a signal emitted by the first sensor element through the conveyed fluid. The first sensor element may then be configured for sensing the signal reflected by the second sensor element. This allows for a longer signal path for determination of irregularities in the fluid.

Finally, the sensor may comprise a first sensor element, a second sensor element designed in the form of an emitter and an additional reflector. In case these three components are arranged on respective fluid conveying members, the signal path may have a triangular form. This provides for different lengths of the signal path.

Furthermore, the apparatus may further comprise a power supply system configured for supplying power to the at least one sensor. Such power supply system may include a generator generating a magnetic or electromagnetic field and at least one antenna configured for generating an induced electric power when being moved through the generated magnetic or electromagnetic field. The antenna is electrically connected to the sensor. Alternatively or additionally, the power supply system may include at least one sliding contact between a stator and a rotor or hub of the conveying device and electric lines coupling the sensor with a power supply unit via the at least one sliding contact.

The apparatus may further comprise a monitoring unit configured for receiving at least one signal from the at least one sensor. Each sensor signal may represent one of the one or more properties of the conveyed fluid. Alternatively, the sensor may be configured for sensing more than one property and for outputting a combined signal representing more than one property. The monitoring unit may further be configured for monitoring the one or more properties of the conveyed fluid. This monitoring may be based on the sensor signal(s) received from the sensor(s). For instance, various sensors may be employed, each of which senses a different property. The monitoring unit may then be capable of receiving signals of the different sensors, of analyzing and interpreting the received signals and of storing either the signal itself or the result of the analysis/interpretation. Furthermore, the monitoring unit controls further system components, such as an air conditioning unit, a ventilation unit, a pressure control system, an alarm etc. based on the received sensor signat(s) and/or the result of the analysis/interpretation. Alternatively or additionally the monitoring unit is capable of transmitting the received signals and/or the result of the analysis/interpretation to a superordinate control unit. Such control unit can then control the further system components and/or store the received signal(s) and/or analysis/interpretation result for later use.

Furthermore, the apparatus may comprise a duct, wherein the conveying device and the at least one sensor may be arranged in the duct. In this way, the conveying device can convey a predetermined amount of fluid through the duct and the apparatus is capable of sensing the one or more properties of the fluid being conveyed through the duct.

The fluid can be air, a particular gas, such as oxygen, carbon-monoxide or carbon-dioxide, water, a cooling fluid or any other fluid that requires having certain properties which need to be monitored. For instance, the impurity or contamination of the fluid can be monitored.

According to a further aspect of the present invention, a vehicle is provided which comprises a space filled with a fluid and an apparatus as outlined above. According to yet another aspect, the present invention is also directed to the use of an apparatus as outlined above for sensing one or more properties of a fluid in an aircraft.

In the following description, examples and preferred implementations of the present invention will be explained by way of reference to the accompanying drawing, wherein:
- Figure 1: illustrates a conventional air extraction system including a sensor;
- Figure 2: illustrates a conventional independent sensor system;
- Figure 3: illustrates a first embodiment of an autonomous apparatus for sensing one or more properties of a fluid;
- Figure 4: depicts a detailed side view of the apparatus according to Figure 3;
- Figure 5: depicts a detailed side view of a further embodiment of an apparatus for sensing one or more properties of a fluid; and
- Figure 6: depicts a plan view of the apparatus according to Figure 5.

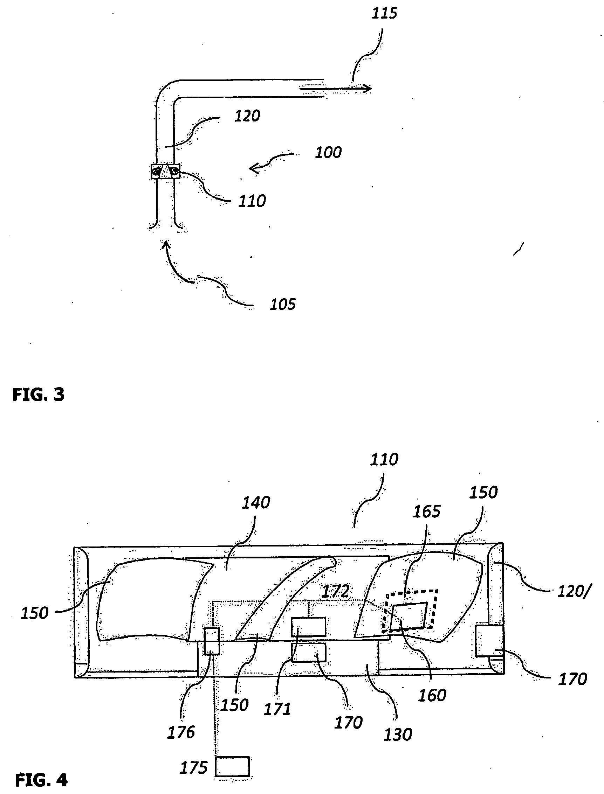

Figures 3 and 4 illustrate an apparatus 100 for sensing one or more properties of a fluid. The apparatus 100 includes conveying device 110 capable of conveying a fluid through a duct 120. The fluid is extracted from a space 105 which may, for example, be a passenger cabin or an avionics bay of an aircraft. After being directed through the duct 120, fluid 115 exiting the duct 120 is returned to the space 105. The apparatus 100 can be installed, for example, in an aircraft, and serve to sense certain properties of air discharged from the passenger cabin, the avionics bay or any other desired location on board the aircraft.

As becomes apparent from Figure 4, in the apparatus 100, the conveying device 110 is designed in the form of a fan and comprises a housing 125. Alternatively, the housing 125 can be formed integral with the duct 120, i.e. a portion of the duct 120 may be designed so as to accommodate the conveying device 110. The conveying device 110 further comprises a stator 130 including, for example, a motor or other power unit. A rotor and hub 140 are mounted onto the motor or power unit, so that it rotates within the housing 125 or duct 120. Furthermore, conveying members 150 which are designed in the form of rotor blades are mounted to or formed at the rotor 140.

A sensor 160 is arranged on the conveying device 110. The sensor 160 is adapted to produce an output signal according to a property of the fluid flowing through the duct 120. In dependence on the design of the sensor 160, the signal output by the sensor 160 may be indicative of the temperature, the humidity or the pressure of the fluid flowing through the duct 120. Further, the sensor 160 may be suitable to detect the percentage or fraction of oxygen, carbon-monoxide, carbon-dioxide etc. within the fluid.

In order to achieve good sensing results, the sensor 160 is arranged on one of the conveying members 150 or on the rotor or hub 140. Thus, the sensor 160 is located on the rotating part of the conveying device 110. Furthermore, the sensor 160 is also arranged at a position, where sufficient fluid passes or flows over the sensor 160, which increases the sensing accuracy. Since the conveying members 150 move through the fluid, the fluid passes over the surface of each conveying member 150. In general, the fluid moves through the duct 120 or housing 125 in the axial direction of the rotor and hub 140. Depending on the rotating speed of the rotor 140, a boundary layer of the fluid in the vicinity of the surface of the conveying member 150 can be influenced. By increasing the rotational speed, the boundary layer decreases. Thus, the sensor 160 can even be integrated into the conveying member 150, while still good sensing results can be achieved. For instance, if the sensor 160 is a temperature sensor, a thin boundary layer does not affect the sensed temperature, whereas a thick boundary layer would act as an insulating layer leading to inaccurate sensing results.

The sensor 160 then can be mounted in a recess formed in the respective conveying member 150 such that a surface of the sensor 160 is arranged flush with a surface of the conveying member 150. This enhances the fluid dynamic properties of the entire apparatus 100 and decreases power consumption. Alternatively, the sensor 160 can be integrated into the conveying device 110 during manufacturing of the conveying device 110. For instance, when producing the conveying device 110 includes an injection molding process, the sensor 160 can be fully integrated into the injected material.

On the other hand, in order to further reduce production costs, the sensor 160 can simply be attached onto the surface of the conveying member 150. Due to the omission of a recess, the conveying device 110 can be produced more easily and the sensor 160 can be provided when needed, so that existing apparatuses can be retrofitted. Furthermore, a sensor 160 can be mostly integrated into the conveying member 150, but has small sensing elements sticking out of the surface of the conveying member 150. Finally, if desired, a plurality of sensors 160 may be attached to or integrated into the conveying device 110. For instance, in order to increase the sensing accuracy, redundant sensors 160 sensing the same fluid property, can be installed. On the other hand, a variety of properties can be sensed by different sensors 160. The arrangement of the sensors 160 can also be varied for any needs. For instance, all sensors 160 can be arranged on a single conveying member 150. Alternatively, the sensors 160 can be distributed over various conveying member 150.

In any case, the combination of conveying device 110 and sensor(s) 160 allows for a more compact design of the entire sensing apparatus 100 compared to conventional systems. Since the fluid flows over the surface of the conveying member 150 and hence the sensor 160 with a high flow rate, less particles, etc. will adhere to the sensor 160. This reduces the sensitivity of the sensor 160 to particles etc. and also reduces costs for maintenance. Moreover, a filter is not required anymore, since less or no particles adhere to the sensor 160. This, again, increases compactness of the apparatus 100 and decreases the amount of required components as well as installation and maintenance cost. The exchange of air filters ceases, which reduces the amounts and costs of parts and components to be provided and stored for maintenance.

If only one sensor 160 is provided on the conveying device 110, imbalances should be avoided. In order to do so, counterweights could be used. For example, a counterweight may be attached to a conveying member 150 not provided with the sensor 160 or the rotor 140. An advantage of a recess formed in a conveying member 150 for accommodating the sensor 160 is, that the weight of the removed material compensates at least partially for the added weight of the sensor 160.

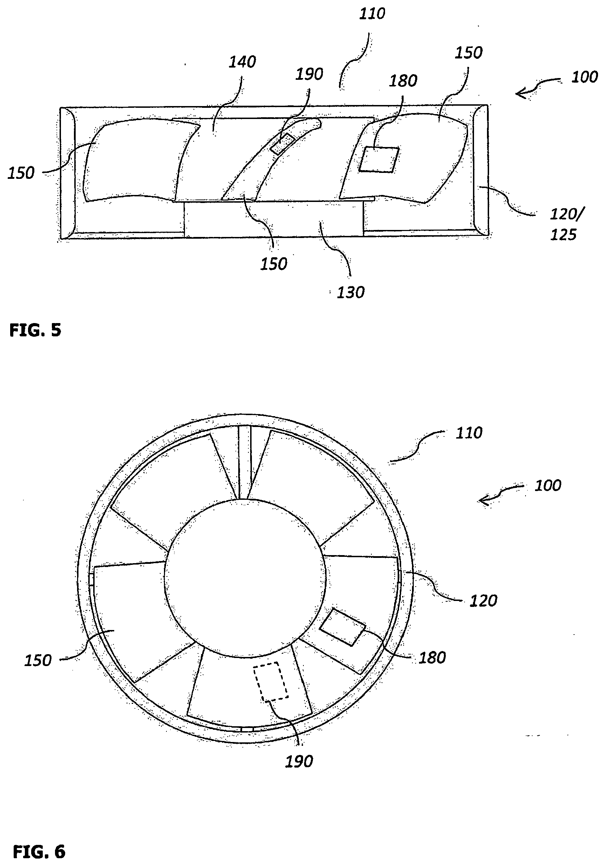

An alternative embodiment of an apparatus 100 for sensing one or more properties of a fluid is illustrated in Figures 5 and 6. The apparatus 100 depicted in Figures 5 and 6 differs from the arrangement according to Figures 3 and 4 in that the sensor 160 now comprises a first sensor element 180 and a second sensor element 190. The first and the second sensor element 180, 190 are arranged on adjacent conveying members 150 as described above regarding the arrangement according to Figures 3 and 4. It is to be noted that the second sensor element 190 Is arranged on a surface of a first conveying member 150 facing a surface of a second, adjacent conveying member 150 which carries the first sensor element 180. Thus, the second sensor element 190, in Figure 6, is depicted in dashed lines, since it is arranged on the lower (bottom) face of the first conveying member 150, while the first sensor element 180 is arranged on an upper (top) face of the adjacent second conveying member 150.

The second sensor element 190 is designed in the form of an emitter emitting signals which may be sensed by the first sensor element 180. Thus, instead of sensing a particular property solely from the fluid passing or flowing over the first sensor element 180 the first sensor element 180 reacts on a signal striking the first sensor element 180. The signals emitted by the second sensor element 190 pass through the space between the conveying members 150 carrying the first and the second sensor element 180, 190. The emitted signals may be light signals, such as infrared light signals, or any other type of radiation to which the first sensor element 180 is sensitive to. Under normal conditions, the first sensor element 180 detects the signal of the second sensor element 190 and generates a corresponding output signal. In case that the fluid between second sensor element 190 and the first sensor element 180 deviates from normal conditions, the emitted signal can be influenced. Thus, the first sensor element 180 receives another signal which leads to a different output signal of the first sensor element 180. The sensor 160 depicted in Figures 5 and 6 and comprising a first and a second sensor element 180, 190 hence is suitable for detecting a property of a fluid along a line which is necessary for detecting, for example, the presence of particles, dust, smoke, spray etc. in a fluid stream.

In a further alternative embodiment of the sensor 160, the second sensor element 190 is designed in the form of a reflector instead of in the form of an emitter. In such an arrangement, the first sensor element 180 is adapted to emit a signal to the second sensor element 190 and also to sense a signal reflected back to the first sensor element 180 by the second sensor element 190. Thus, the number of active components can be reduced. The length of the signal path increases as well, thereby increasing the sensing accuracy.

According to another implementation of the sensor 160, a first sensor element 180, a second sensor element 190 and an additional reflector are arranged in a triangular form. For instance, the first and the second sensor element 180, 190 may arranged on the rotor 140 of the conveying device 110 in a manner facing the tips of the conveying members 150. There, the additional reflector may be installed. In an easy and cost effective implementation, a reflecting coating may be applied onto the surface of the tip of at least one conveying member 150. Alternatively, at least one conveying member 150 may be entirely coated with a reflecting coating. As a further alternative, the rotor 140 may be made reflective, the first and the second sensor element 180, 190 may be arranged on a surface of one or more conveying members 150 in a manner facing the rotor 140 or at least emitting and sensing signals to and reflected from the rotor.

In order to supply the sensor with energy or electric power, a power supply system is provided. Besides a simple power supply, such as a battery, there are different, implementation options for supplying energy (all illustrated in Figure 4 at once). Since the sensor 160 or sensor elements 180, 190 can be arranged on a moving part of the conveying device 110, these implementation options reduce the moving or rotating weight. For instance, the power supply system may transmit energy in a wireless fashion. This is achieved by a generator 170 generating a magnetic or electromagnetic field and at least one antenna 165, 171 configured for generating an induced electric power when being moved through the generated magnetic or electromagnetic field. The generator 170 is static relative to the antenna 165, 171 and, hence, relative to moving parts of the conveying device 110. The generator 170 can be arranged at various locations depending on the positions of the sensor(s) 160. If a sensor 160 is installed on a conveying member 150, the generator 170 can be positioned in front of (or behind) the conveying member in the moving direction of the fluid. Alternatively, the generator 170 can be positioned at or in the housing 125 of the apparatus 100 or the duct 120. The generator 170 itself could be connected to a power supply of the conveying device 110 or may have its own power supply (not shown). The antenna 165, being electrically connected to the sensor 160, passes the generator 170 when the conveying device 110 is moving. For instance, as illustrated with dashed lines in Figure 4 the antenna 165 is arranged on or in a conveying member 150. Thus, the antenna 165 repetitively passes through the magnetic or electromagnetic field which induces an electric power in the antenna 165 that can be used by the sensor 160. The antenna 165 can be formed by a cable or a printed circuit electrically connected to the sensor 160. This allows for a cost-effective sensor, since the antenna 165 and sensor 160 can be formed as an integrated module and the antenna 165 can also transmit signals from the sensor 160, while supplying power to the sensor 160 at the same time.

A further wireless power supply system can be implemented by positioning the generator 170 at the stator 130 of the conveying device 110. The antenna 171 can then be arranged at the hub 140, while one or more electric lines 172 (dotted lines in Figure 4), such as cable(s) and/or printed circuit(s), connect the antenna 171 with the sensor(s) 160. In this case, a single antenna 171 can be used for a plurality of sensors 160.

Alternatively or additionally to the above implementation options, the power supply system can include at least one sliding contact 176 between the stator 130 and the rotor or hub 140 of the conveying device 110 and electric lines 172 (dotted lines in Figure 4) coupling the sensor(s) 160 with a power supply unit 175 via the at least one sliding contact 176.

It has to be noted that Figure 4 illustrates all of the implementation options for providing power to the sensor(s) 160. The present disclosure is not restricted to this illustration. Rather only one or even multiple of these implementation options can be employed. Furthermore, more than one generator 170 can be used to generate magnetic or electromagnetic fields for powering up the sensor(s) 160. In Figures 5 and 6 the power system is not depicted to improve clarity of the Figures.

A further implementation option uses a gyrating, centrifugal or oscillating weight (not shown) on a moving part of the conveying device 110 for generating power when the conveying device 110 accelerates or decelerates. This allows for sensing fluid properties by simply switching on the conveying device 110 for a certain time period during which sensing should take place.

In all embodiments of an apparatus 100 described above, the output signals generated by the sensor(s) 160 can be transmitted to a monitoring unit (not shown). The transmission of the output signals can be accomplished in a wired or wireless manner. In case of a wireless signal transmission, additional contacts between the rotating parts of the conveying device 110 and the stator 130 can be omitted. According to a preferred implementation, the sensor(s) 160 operate(s) under a radiofrequency technique. For instance, as described with respect to Figure 4, a sensor 160 can be connected to an antenna 165. The antenna 165 can be used for transmitting output signals and also for generating electric power for the sensor 160. In this case, the sensor(s) 160 does/do not require a distinct power supply which further reduces weight and also cost of maintenance. In addition, there are also no power lines which need to be installed between the rotating elements and the stator 130 of the conveying device 110.

A wireless transmission technique further allows for a local component to receive sensor signals, such as the above monitoring unit, but also a remote system. For instance, in a vehicle, such as an airplane, an existing multi-functional wireless computing system could receive the sensor signals. Alternatively, a local monitoring unit or other receiving component receives the sensor signals wirelessly and transmits them further to a remote system in a wireless or wired manner.

## Claims

1. Apparatus (100), in particular for use in an aircraft, for sensing one or more properties of a fluid, comprising:
- a conveying device (110) configured for conveying the fluid; and
**characterized in that**
- at least one sensor (160) is arranged on a rotating part of the conveying device (110) and being configured for sensing the one or more properties of the conveyed fluid.

2. Apparatus according to claim 1, wherein the conveying device (110) comprises at least one fluid conveying member (150), and wherein the sensor (160) is arranged on the fluid conveying member (150).

3. Apparatus according to claim 2, wherein the at least one fluid conveying member (150) is designed in the form of a rotor blade.

4. Apparatus according to claim 2 or 3, wherein the sensor (160) is mounted on a surface of the fluid conveying member (150), in particular in such a manner that a surface of the sensor (160) is arranged flush with a surface of the fluid conveying member (150).

5. Apparatus according to one of claims 2 to 4, wherein an equal number of sensors (160) is arranged on each fluid conveying member (150).

6. Apparatus according to one of claims 1 to 5, wherein the sensor (160) comprises a first sensor element (180) and a second sensor element (190), the second sensor element (190) being designed in the form of an emitter configured for emitting a signal through the conveyed fluid, and the first sensor element (180) being configured for sensing the signal emitted by the second sensor element (190).

7. Apparatus according to claim 6, wherein the second sensor element (190) is arranged on a first fluid conveying member (150) of the conveying device (110) and the first sensor element (180) is arranged on a second fluid conveying member (150) of the conveying device (110) in such a manner that the first and the second sensor element (180, 190) face each other.

8. Apparatus according to claim 7, wherein the first and second fluid conveying members (150) are arranged adjacent to each other.

9. Apparatus according to one of claims 1 to 8, wherein the sensor (160) comprises a first sensor element (180) and a second sensor element (190), the second sensor element (190) being designed in the form of a reflector configured for reflecting a signal emitted by the first sensor element (180) through the conveyed fluid, and the first sensor element (180) being configured for sensing the signal reflected by the second sensor element (190).

10. Apparatus according to one of claims 1 to 9, further comprising:
- a power supply system configured for supplying power to the at least one sensor (160), wherein the power supply system comprises:
- a generator (170) generating a magnetic or electromagnetic field and at least one antenna (165, 171) configured for generating an induced electric power when being moved through the generated magnetic or electromagnetic field, the antenna (165, 171) being electrically connected to the sensor (160); and/or
- at least one sliding contact (176) between a stator (130) and a rotor or hub (140) of the conveying device (110) and electric lines (172) coupling the sensor (160) with a power supply unit (175) via the at least one sliding contact (176).

11. Apparatus according to one of claims 1 to 10, further comprising:
- a monitoring unit configured for receiving at least one sensor signal from the at least one sensor (160), each sensor signal representing one of the one or more properties of the conveyed fluid, and monitoring the one or more properties of the conveyed fluid.

12. Apparatus according to one of claims 1 to 11, further comprising:
- a duct (120) configured to be flown through with the fluid,
wherein the conveying device (110) and the at least one sensor (160) are arranged in the duct (120).

13. Apparatus according to one of claims 1 to 12, wherein the fluid is air.

14. Vehicle comprising:
- a space (105) filled with a fluid; and
- an apparatus (100) according to one of claims 1 to 13 for sensing one or more properties of the fluid in the space.

15. Use of an apparatus (100) according to one of claims 1 to 13 for sensing one or more properties of a fluid in an aircraft.

## Patentansprüche

1. Vorrichtung (100), insbesondere zur Verwendung in einem Flugzeug, zum Erkennen einer oder mehrerer Eigenschaften eines Fluids, umfassend:
- ein Fördergerät (110), das eingerichtet ist, das Fluid zu fördern;
**gekennzeichnet durch**
- mindestens einen Sensor (160), der auf einem rotierenden Teil des Fördergeräts (110) angeordnet ist und eingerichtet ist, die eine oder mehreren Eigenschaften des geförderten Fluids zu erkennen.

2. Vorrichtung gemäß Anspruch 1, wobei das Fördergerät (110) mindestens ein Fluidförderelement (150) umfasst, und wobei der Sensor (160) auf dem Fluidförderelement (150) angeordnet ist.

3. Vorrichtung gemäß Anspruch 2, wobei das mindestens eine Fluidförderelement (150) in der Form eines Rotorblatts ausgebildet ist.

4. Vorrichtung gemäß Anspruch 2 oder 3, wobei der Sensor (160) auf einer Oberfläche des Fluidförderelements (150) befestigt ist, insbesondere in solch einer Weise, dass eine Oberfläche des Sensors (160) bündig mit einer Oberfläche des Fluidförderelements (150) angeordnet ist.

5. Vorrichtung gemäß einem der Ansprüche 2 bis 4, wobei eine gleiche Anzahl von Sensoren (160) auf jedem Fluidförderelement (150) angeordnet ist.

6. Vorrichtung gemäß einem der Ansprüche 1 bis 5, wobei der Sensor (160) ein erstes Sensorelement (180) und ein zweites Sensorelement (190) umfasst, wobei das zweite Sensorelement (190) in Form eines Emitters, der eingerichtet ist, ein Signal durch das geförderte Fluid zu emittieren, ausgestaltet ist, und das erste Sensorelement (180) eingerichtet ist, das durch das zweite Sensorelement (190) emittierte Signal zu erkennen.

7. Vorrichtung gemäß Anspruch 6, wobei das zweite Sensorelement (190) auf einem ersten Fluidförderelement (150) des Fördergeräts (110) angeordnet ist, und das erste Sensorelement (180) auf einem zweiten Fluidförderelement (150) des Geräts (110) in solch einer Weise angeordnet ist, dass sich das erste und zweite Sensorelement (180, 190) gegenüberstehen.

8. Vorrichtung gemäß Anspruch 7, wobei das erste und zweite Fluidförderelement (150) nebeneinander angeordnet sind.

9. Vorrichtung gemäß einem der Ansprüche 1 bis 8, wobei der Sensor (160) ein erstes Sensorelement (180) und ein zweites Sensorelement (190) umfasst, wobei das zweite Sensorelement (190) in Form eines Reflektor, der eingerichtet ist, ein durch das erste Sensorelement (180) emittiertes Signal durch das geförderte Fluid zu reflektieren, und wobei das erste Sensorelement (180) eingerichtet ist, das durch das zweite Sensorelement (190) reflektierte Signal zu erkennen.

10. Vorrichtung gemäß einem der Ansprüche 1 bis 9, des weiteren umfassend:
- ein Energieversorgungssystem, das eingerichtet ist, den mindestens einen Sensor (160) mit Energie zu versorgen, wobei das Energieversorgungssystem umfasst:
- einen Generator (170) der ein magnetisches oder elektromagnetisches Feld erzeugt, und mindestens eine Antenne (165, 171), die eingerichtet ist, eine induzierte elektrische Energie zu erzeugen, wenn sie durch das erzeugte magnetische oder elektromagnetische Feld bewegt wird, wobei die Antenne (165, 171) mit dem Sensor (160) elektrisch verbunden ist; und/oder
- mindestens einen Schleifkontakt (176) zwischen einem Stator (130) und einem Rotor oder Nabe (140) des Fördergeräts (110) und elektrische Leitungen (172), die den Sensor (160) mit einer Energieversorgungseinheit (175) über den mindestens einen Schleifkontakt (176) koppeln.

11. Vorrichtung gemäß einem der Ansprüche 1 bis 10, des weiteren umfassend:
- eine Überwachungseinheit, die eingerichtet ist, mindestens ein Sensorsignal von dem mindestens einen Sensor (160) zu empfangen, wobei jedes Sensorsignal eine der einen oder mehreren Eigenschaften des geförderten Fluids repräsentiert, und die eine oder mehreren Eigenschaften des geförderten Fluids zu überwachen.

12. Vorrichtung gemäß einem der Ansprüche 1 bis 11, des weiteren umfassend:
- eine Leitung (120), die eingerichtet ist, von einem Fluid durchströmt zu werden, wobei das Fördergerät (110) und der mindestens eine Sensor (160) in der Leitung (120) angeordnet sind.

13. Vorrichtung gemäß einem der Ansprüche 1 bis 12, wobei das Fluid Luft ist.

14. Fahrzeug umfassend:
- einen Raum (105), der mit einem Fluid gefüllt ist; und
- eine Vorrichtung (100) gemäß einem der Ansprüche 1 bis 13 zum Erkennen einer oder mehrerer Eigenschaften des Fluids in dem Raum.

15. Verwendung einer Vorrichtung (100) gemäß einem der Ansprüche 1 bis 13 zum Erkennen einer oder mehrerer Eigenschaften eines Fluid in einem Flugzeug.

## Revendications

1. Appareil (100), en particulier destiné à une utilisation dans un aéronef, permettant de détecter une ou plusieurs propriétés d'un fluide, comprenant :
un dispositif de transport (110) configuré pour transporter le fluide ; et
**caractérisé en ce que**
au moins un détecteur (160) est agencé sur une partie tournante du dispositif de transport (110) et est configuré pour détecter la ou les plusieurs propriétés du fluide transporté.

2. Appareil selon la revendication 1, dans lequel le dispositif de transport (110) comprend au moins un élément de transport de fluide (150), et dans lequel le détecteur (160) est agencé sur l'élément de transport de fluide (150).

3. Appareil selon la revendication 2, dans lequel le ou les éléments de transport de fluide (150) sont conçus sous la forme d'une pale de rotor.

4. Appareil selon la revendication 2 ou 3, dans lequel le détecteur (160) est monté sur une surface de l'élément de transport de fluide (150), en particulier de telle sorte qu'une surface du détecteur (160) affleure une surface de l'élément de transport de fluide (150).

5. Appareil selon l'une des revendications 2 ou 4, dans lequel un nombre égal de détecteurs (160) est agencé sur chaque élément de transport de fluide (150).

6. Appareil selon l'une des revendications 1 ou 5, dans lequel le détecteur (160) comprend un premier élément de détection (180) et un second élément de détection (190), le second élément de détection (190) étant conçu sous la forme d'un émetteur configuré pour émettre un signal par l'intermédiaire du fluide transporté, et le premier élément de détection (180) étant configuré pour détecter le signal émis par le second élément de détection (190).

7. Appareil selon la revendication 6, dans lequel le second élément de détection (190) est disposé sur un premier élément de transport de fluide (150) du dispositif de transport (110) et le premier élément de détection (180) est disposé sur un second élément de transport le fluide (150) du dispositif de transport (110) de telle sorte que le premier et le second élément de détection (180, 190) se font face l'un à l'autre.

8. Appareil selon la revendication 7, dans lequel le premier et le second élément de transport de fluide (150) sont disposés de façon adjacente l'un à l'autre.

9. Appareil selon l'une des revendications 1 à 8, dans lequel le détecteur (160) comprend un premier élément de détection (180) et un second élément de détection (190), le second élément de détection (190) étant conçu sous la forme d'un réflecteur configuré pour réfléchir un signal émis par le premier élément de détection (180) par l'intermédiaire du fluide transporté, et le premier élément de détection (180) étant configuré pour détecter le signal réfléchi par le second élément de détection (190).

10. Appareil selon l'une des revendications 1 à 9, comprenant en outre :
- un système d'alimentation électrique configuré pour fournir de l'alimentation à un ou des détecteurs (160), dans lequel le système d'alimentation électrique comprend :
- un générateur (170) générant un champ magnétique ou électromagnétique et au moins une antenne (165, 171) configuré pour générer une alimentation électrique induite lorsqu'elle est déplacée par le biais du champ magnétique ou électromagnétique généré, l'antenne (165, 171) étant connectée électriquement au détecteur (160) ; et/ou
- au moins un contact coulissant (176) entre un stator (130) et un rotor ou concentrateur (140) du dispositif de transport (110) et des lignes électriques (172) qui relient le détecteur (160) à une unité d'alimentation électrique (175) par l'intermédiaire de l'au moins un contact coulissant (176).

11. Appareil selon l'une des revendications 1 à 10, comprenant en outre :
- une unité de surveillance configurée pour recevoir au moins un signal de détecteur en provenance de l'au moins un détecteur (160), chaque signal de détection représentant l'une de la ou des propriétés du fluide de transport, et pour surveiller la ou les propriétés du fluide de transport.

12. Appareil selon l'une des revendications 1 à 11, comprenant en outre :
- un conduit (120) configuré pour être traversé par le fluide,
dans lequel le dispositif de transport (110) et le ou les détecteurs (160) sont agencés dans le conduit (120).

13. Appareil selon l'une des revendications 1 à 12, dans lequel le fluide représente de l'air.

14. Véhicule comprenant :
- un espace (105) rempli d'un fluide ; et
- un appareil (100) selon l'une des revendications 1 à 13 permettant de détecter une ou plusieurs propriétés du fluide dans l'espace.

15. Utilisation d'un appareil (100) selon l'une des revendications 1 à 13 permettant de détecter une ou plusieurs propriétés d'un fluide dans un aéronef.
